# EUROPÄISCHE PATENTSCHRIFT

(11) **EP 3 767 186 B1**
(45) Veröffentlichungstag und Bekanntmachung des Hinweises auf die Patenterteilung: **02.08.2023**
(21) Anmeldenummer: 20183983.4
(22) Anmeldetag: 03.07.2020
(51) Int. Cl.: F24D 3/18, F24D 19/10, F24H 4/02, F25B 30/00, F25B 49/00

(54) **VERFAHREN ZUR STEUERUNG EINER AUSSENEINHEIT EINER WÄRMEPUMPE**
METHOD FOR CONTROLLING AN OUTDOOR UNIT OF A HEAT PUMP
PROCÉDÉ DE COMMANDE D'UNE UNITÉ EXTÉRIEURE D'UNE POMPE À CHALEUR

(30) Priorität: 16.07.2019 DE 102019119229
(43) Veröffentlichungstag der Anmeldung: 20.01.2021
(73) Patentinhaber: Vaillant GmbH, 42859 Remscheid (DE)
(72) Erfinder: Habenicht, Martin, 42857 Remscheid (DE); Raimun, Lis, 42369 Wuppertal (DE); Müssner, Matthias, 42499 Hückeswangen (DE)
(74) Vertreter: Popp, Carsten

(56) Entgegenhaltungen:
- EP-A1- 2 759 787
- EP-A1- 3 358 279
- EP-A1- 3 486 582

## Beschreibung

Die Erfindung betrifft ein Verfahren zum Ablassen von Wasser nach einem Frostschaden in einer Außeneinheit einer Luft/Wasser-Wärmepumpe, insbesondere von Wärmepumpen, die der Umgebungsluft Wärme entnehmen oder diese an sie abgeben, und die außerhalb von Gebäuden aufgestellt sind. Der Begriff der Wärmepumpe wird hierbei umfassend für Geräte verwendet, in denen ein linksdrehender Clausius-Rankine-Kreisprozess ablaufen soll, wobei entweder Nutzwärme oder Nutzkälte oder beides gleichzeitig erzeugt wird. Auch kann eine solche Wärmepumpe gestuft ausgeführt sein, um Heizwärme bei einem niedrigen Temperaturniveau, z.B. bei 28 Grad Celsius für eine Fußbodenheizung, und Brauchwasser bei einem höheren Temperaturniveau, z.B. bei 70 Grad Celsius bereitzustellen. Hierbei entzieht die Wärmepumpe einem kälteren Medium Wärme und transformiert sie mittels elektrischer Energie auf ein höheres Temperaturniveau.

Beim Entzug dieser Wärme kann jeweils auch Kälte erzeugt werden. Auch die Kälte kann bei verschiedenen Temperaturen benötigt werden, für die Klimatisierung beispielsweise bei 14 Grad Celsius und für die Lebensmittelkühlung auch 4 Grad Celsius oder für Gefrieranwendungen noch tiefer. In manchen Bauarten kann zwischen Heizbetrieb und Klimatisierung umgeschaltet, in anderen können beide Betriebsarten parallel betrieben werden.

Derartige Wärmepumpen besitzen mindestens einen geregelten Kompressor bzw. Verdichter, mindestens ein geregeltes elektronisches Expansionsventil, mindestens einen Kondensator und mindestens einen Verdampfer. Sofern mehrere Temperaturstufen bedient werden sollen, können auch gestufte Kompressoren zum Einsatz kommen. Diese Einrichtungen können ebenfalls in der Außeneinheit untergebracht sein, sie können aber auch im Innenbereich eines Gebäudes aufgestellt sein.

Die Entnahme oder Abgabe von Wärmeenergie an die Außenluft kann dabei auf unterschiedliche Weise erfolgen, wobei in der Regel ein Lüfter zum Einsatz kommt, der ebenso wie der Kompressor in neueren Bauformen meist drehzahlgeregelt ist. Im Heizbetrieb wird dabei der Verdampfer von Umgebungsluft durchströmt, im Klimatisierungsbetrieb der Kondensator. Es können je nach Bauart auch Wärmeträgerfluide zwischen den Arbeitsfluidumlauf und die Wärmeaufnahmestelle aus der Umwelt bzw. die Wärmeabgabestelle in die Umwelt die Aufgabe des Wärmetransports übernehmen, wenn größere Distanzen zu überwinden sind oder gefährliche Arbeitsfluide zum Einsatz kommen, die einer gesondert gesicherten Abschirmung bedürfen. Typische Wärmeträgerfluide sind Salzsole und Wasser, als Arbeitsfluide wurden in der Vergangenheit fluorierte Kohlenwasserstoffe, sogenannte Sicherheitskältemittel verwendet, die inzwischen durch R290, R1270, R600a, Ammoniak und andere Arbeitsfluide ersetzt werden.

Bei winterlichen Temperaturen wird der Wärmetauscher in der Außeneinheit als Verdampfer genutzt, da die Wärmepumpe im Heizbetrieb läuft. Damit die Umgebungsluft auch bei Temperaturen unter 5 Grad Celsius oder sogar bei Minusgraden als Wärmequelle genutzt werden kann, muss das verwendete Kältemittel deutlich kälter sein als die Außenluft, und der Verdampfer weist entsprechend auch eine Temperatur unter dem Gefrierpunkt auf. Das hat zur Folge, dass die in der Luft enthaltene Feuchtigkeit als kristallines Eis auf der Wärmetauscheroberfläche des Verdampfers ausfällt. Es bilden sich dicke Eispanzerschichten, was zu einer beträchtlichen Leistungsminderung bis hin zur Beschädigung der Wärmepumpe führen kann.

Trotz einer Vielzahl bekannter Gegenmaßnahmen wie eingebrachten elektrischen Heizstäben, einer Beaufschlagung mit Heißgas, dem Abtauen mit Heizungswasser, der Verwendung eines Warmwasser-Pufferspeichers und verschiedenen Varianten der phasenweisen Prozessumkehr treten derartige Beschädigungen gelegentlich auf, weshalb sowohl das Arbeitsfluid der Wärmepumpe als auch das Wärmeträgerfluid des Heizungskreislaufs abgelassen werden muss, um eine Reparatur durchführen zu können.

Hierbei kann das Problem auftreten, dass ein Teil des Arbeitsfluids in den Kreislauf des Wärmeträgerfluids gelangt, was bedeutet, dass sich ein entzündliches Gas im Wärmeträgerfluid befinden kann. Da das Arbeitsfluid, beispielsweise R290, dabei unter einem deutlich höheren Druck als das Wärmeträgerfluid befindet, perlt es in Form kleiner Gasblasen in das Wärmeträgerfluid ein. Der herkömmliche Stand der Technik zum Ablassen von Arbeitsfluid und Wärmeträgerfluid ist daher nicht geeignet, in solchen Fällen die Bildung eines entzündlichen oder sogar explosiven Gemisches sicher zu verhindern.

So beschreibt die Firmendruckschrift "Caleffi Hydronic Solutions - Produktkatalog 06/2017" in Kapitel 13b, Seiten 207-217, Frostschutzarmaturen sowie ein Frostschutz-Set für außen aufgestellte Wärmepumpen. Hierbei werden Absperrarmaturen und Entlüftungen innerhalb des Gebäudes angeordnet und die Umwälzpumpe des Heizkreislaufs befindet sich auf der Abströmseite nach dem Übergabewärmetauschers zum Arbeitsfluid. Im Falle eines Übertritts eines entzündlichen Arbeitsfluids in das Wärmeübertragerfluid, etwa während eines Frostschadens, würde das ausgetretene Arbeitsfluid in das Gebäude gelangen und dort Schaden anrichten können.

In der EP 2 759 787 A1 wird eine Wärmepumpe mit einer Regelung beschrieben, die über eine Leckagedetektion für den Fall verfügt, dass Kältemittel vom Primärkreislauf der Wärmepumpe, der in einer Außenbox untergebracht ist, in das Wasser des Sekundärkreislaufs, der die Außenbox mit demGebäudeinneren verbindet, gelangt. In diesem Fall werden die Ventile der Leitungen, die den Sekundärkreislauf mit dem Innenraum verbinden, geschlossen, so dass kein Kältemittel mehr in den Innenraum gelangen kann.

In der EP 2 182 261 B1 wird ein Frostschutzventil beschrieben, welches im Falle eines drohenden oder eingetretenen Frostschadens für eine Absperrung des Heizkreislaufs sorgt und für eine Entleerung und Umleitung des Heizfluids geeignet ist. Ein Schutz gegen mitgerissenes Arbeitsfluid im Falle einer frostbedingten Leckage ist jedoch nicht vorgesehen.

In der EP 3 486 582 A1 wird eine innen aufgestellte Wärmepumpe beschrieben, bei der leckagebedingt ausgetretenes Arbeitsfluid innerhalb des Gehäuses nach unten sinkt und von dort zusammen mit Luft durch einen Adsorber geleitet wird, in welchem das gasförmige Arbeitsfluid adsorbiert wird. Hierbei wird die Gewichtszunahme des beladenen Adsorbates gemessen. Die Vorrichtung eignet sich aber nicht für eine Außeneinheit einer Wärmepumpe und sie kann auch nicht verhindern, dass leckagebedingt Arbeitsfluid in einen Sekundärkreislauf gelangt.

Die Aufgabe der Erfindung ist es daher, eine sichere Methode zur Verfügung zu stellen, die ein gefahrloses Ablassen von Arbeitsfluid und Wärmeträgerfluid ermöglicht, damit nachfolgend eine Reparatur erfolgen kann.

Die Erfindung löst diese Aufgabe für eine Außeneinheit einer Wärmepumpe durch die Merkmale des Patentanspruchs 1.

In einer Ausgestaltung der Erfindung ist vorgesehen, dass das Wärmeträgerfluid mittels eines Entleerungsventils aus dem Übergabewärmetauscher in einen offenen Behälter abgelassen wird, sofern es noch fließfähig ist. Falls hierbei Gasblasen bestehend aus entzündlichem Arbeitsfluid ausgasen, bewirkt die Verdünnung mit der Außenluft, dass keine Entzündungsgefahr besteht. Gleichzeitig ist vorgesehen, dass im Gehäuse durch eine automatische Be- und Entflüftungsvorrichtung eine Luftzufuhr ermöglicht wird, damit die Entleerung beschleunigt wird. Falls die Entleerung aufgrund von strengem Frost nicht möglich ist, kann über die automatische Entlüftungsvorrichtung eventuell leckagebedingtes Arbeitsfluid über Dach austreten, wobei es sich so stark verdünnt, dass eine Entzündungsgefahr ausgeschlossen ist. Die automatische Be- und Entlüftungsvorrichtung entlüftet dabei nicht in das Gehäuse, sondern direkt in den Außenbereich.

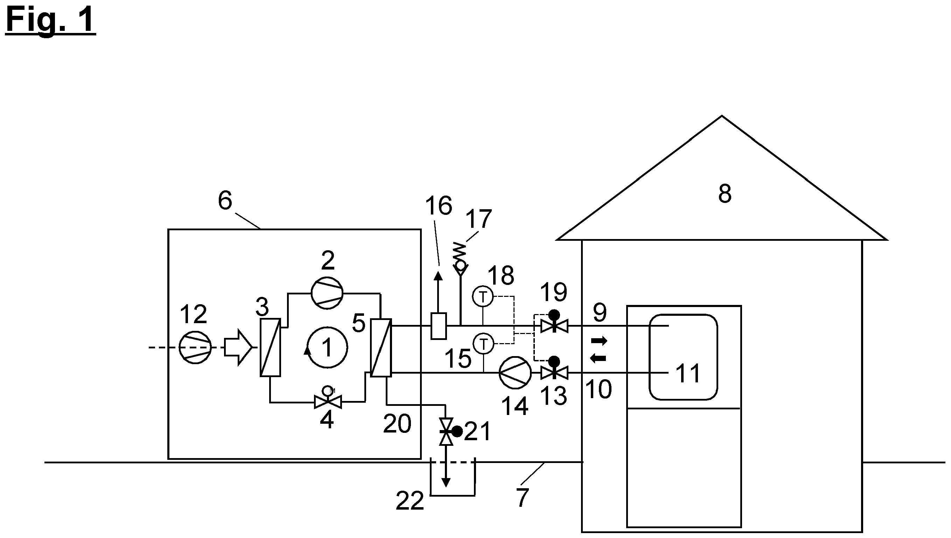

Die Erfindung wird anhand der Figur 1 näher erläutert. Dabei zeigt Figur 1 eine schematische Aufstellung mit der entsprechenden Ausgestaltung. Die Erfindung ist jedoch nicht auf dieses Ausführungsbeispiel beschränkt.

Fig. 1 zeigt in diesem Beispiel einen Kältekreis 1 mit einem Verdichter 2 für Arbeitsfluid, einem Verdampfer 3, einem Entspannungsventil 4 und einem Kondensator 5. Der Kältekreis ist in einer außen aufgestellten Box, einer sogenannten Außenbox 6, auf der Höhe des Erdbodens 7 angeordnet. Der Kältekreis versorgt das Gebäude 8 über die Gebäudevorlaufleitung 9 mit Wärme und nimmt abgekühltes Vorlaufwasser aus der Gebäuderücklaufleitung 10 zurück. Im Gebäude 8 wird aus Warmwasser in der Heizungsanlage 11 Heizungswasser und Heißwasser erzeugt und den Nutzern zur Verfügung gestellt. Die Wärmeenergie wird dabei der Umgebungsluft entnommen, die durch einen Lüfter 12 an den Verdampfer 3 gefördert wird. Eine solche Anordnung ist bekannter Stand der Technik.

Die Gebäuderücklaufleitung 10 verfügt über ein Magnetventil 13, welches im Störfall automatisch schließt, entweder aufgrund von Stromausfall oder aufgrund von Temperaturunterschreitung. Das Rücklaufwasser wird gefördert durch die Förderpumpe 14, die im Störfall ebenfalls abgeschaltet wird. Nach der Förderpumpe 14 ist eine Temperaturmessstelle 15 angeordnet, die die Wassertemperatur misst. Sowohl das Magnetventil 13 als auch die Förderpumpe 14 und die Temperaturmessstelle 15 sind außerhalb des Gebäudes 8 angeordnet, sie können auch innerhalb der Außenbox 6 vorgesehen werden. Das Rücklaufwasser wird im Normalfall dem Kondensator 5 zugeführt, wo es erwärmt wird.

Das erwärmte Vorlaufwasser durchläuft zunächst einen automatischen Be- und Entlüfter 16. Während im herkömmlichen Stand der Technik solche Be- und Entlüfter zumeist am höchsten Punkt der Gebäudevorlaufleitung angeordnet werden, muss hier eine Anordnung unmittelbar hinter dem Kondensator 5 erfolgen, da sich im Leckagefall entzündliches Gas in der Vorlaufwasserleitung befinden könnte. Der Be- und Entlüfter 16 kann sich außerhalb oder innerhalb der Außenbox 6 befinden, falls er sich innerhalb befindet, muss eine direkte Entlüftung ins Freie vorgesehen werden, damit kein entzündliches Gas in die Außenbox 6 entlüftet wird. Stromabwärts des Be- und Entlüfters 16 werden ein Überdruckventil 17, eine Temperatur-messstelle 18 und ein Magnetventil 19 vorgesehen.

Im Störungsfall schließen beide Magnetventile 13 und 19 und entkoppeln auf diese Weise die möglicherweise mit entzündlichem Gas kontaminierten Wasserkreislauf mit dem Gebäude 8. Falls es sich bei der Störung lediglich um einen Stromausfall handelt, können die Magnetventile 13 und 19 wieder geöffnet werden und die Förderpumpe 14 wird wieder eingeschaltet. Falls es sich aber um einen Frostschaden handelt, was durch einen Temperaturabfall an mindestens einer der Temperaturmessstellen 15 und 18 erkennbar ist, wird die Wärmepumpe abgeschaltet bis auf den Lüfter 12, der für eine ausreichende Verdünnung eventuell in die Außenbox ausgetretenen entzündlichen Arbeitsfluids sorgt. Weiterhin wird das im Kondensator und den Leitungen bis zu den Magnetventilen befindliche Wasser über die Ablassleitung 20 und das sich öffnende Magnetventil 21, welches im Normalfall immer geschlossen ist, in den offenen und belüfteten Behälter 22 eingeleitet, wo es ausgasen kann.

### Bezugszeichenliste

- 1: Kältekreis
- 2: Verdichter
- 3: Verdampfer
- 4: Entspannungsventil
- 5: Kondensator
- 6: Außenbox
- 7: Erdboden
- 8: Gebäude
- 9: Gebäudevorlaufleitung
- 10: Gebäuderücklaufleitung
- 11: Heizungsanlage
- 12: Lüfter
- 13: Magnetventil
- 14: Förderpumpe
- 15: Temperaturmessstelle
- 16: Be- und Entlüfter
- 17: Überdruckventil
- 18: Temperaturmessstelle
- 19: Magnetventil
- 20: Ablassleitung
- 21: Magnetventil
- 22: Behälter

## Patentansprüche

1. Verfahren zur Steuerung einer Außeneinheit einer Wärmepumpe, enthaltend
- ein außerhalb eines Gebäudes (8) aufgestelltes Gehäuse (6) mit einem in einem Fluidkreislauf (1) geführtem Arbeitsfluid,
- wobei der Fluidkreislauf mindestens einen Verdichter (2), mindestens ein Entspannungsorgan (4) und mindestens zwei Wärmeübertrager (3, 5) aufweist,
- wobei einer der Wärmeübertrager (5) an einen Wärmeträgerfluidkreislauf (9, 10, 11) angeschlossen ist, der in das Gebäude (8) führt,
- und in der Verbindung des Wärmeträgerfluidkreislaufs (9, 10, 11) zwischen Gehäuse (6) und Gebäude (8) sowohl in einer Hinleitung als auch in einer Rückleitung jeweils ein automatisches Absperrventil (13, 18) vorgesehen ist,
- und eine Förderpumpe (14) für Wärmeträgerfluid zuströmseitig zum Wärmeübertrager (5) angeordnet ist,
**dadurch gekennzeichnet, dass**
die Temperatur des Wärmeträgerfluidkreislaufs (9, 10, 11) am Eingang (15) und am Ausgang (18) des Wärmeübertragers (5) gemessen wird,
und falls eine der beiden Temperaturen unter Null Grad Celsius liegt, beide Absperrventile (13, 18) automatisch geschlossen werden und ein Fließen des Wärmeträgerfluids in das Gebäude (8) verhindert wird.

2. Verfahren nach Anspruch 1, **dadurch gekennzeichnet, dass** Wärmeträgerfluid mittels eines Entleerungsventils (21) aus dem Wärmeübertrager (5) in einen offenen Behälter (22) abgelassen wird.

## Claims

1. Method for controlling an outdoor unit of a heat pump containing
- a housing (6) which is installed outside a building (8) and has a working fluid guided in a fluid circuit (1),
- wherein the fluid circuit has at least one compressor (2), at least one expansion member (4) and at least two heat exchangers (3, 5),
- wherein one of the heat exchangers (5) is connected to a heat transfer fluid circuit (9, 10, 11) leading into the building (8),
- and in the connection of the heat transfer fluid circuit (9, 10, 11) between the housing (6) and the building (8), an automatic shut-off valve (13, 18) is provided in each case both in a supply line and in a return line,
- and a feed pump (14) for heat transfer fluid is arranged on the inflow side with respect to the heat exchanger (5),
**characterised in that**
the temperature of the heat transfer fluid circuit (9, 10, 11) is measured at the inlet (15) and at the outlet (18) of the heat exchanger (5),
and if either temperature is below zero degrees Celsius,
both shut-off valves (13, 18) are automatically closed and the heat transfer fluid is prevented from flowing into the building (8).

2. Method according to claim 1, **characterised in that** heat transfer fluid is discharged from the heat exchanger (5) into an open container (22) by means of a drainage valve (21).

## Revendications

1. Procédé de commande d'une unité extérieure d'une pompe à chaleur, comprenant
- un logement (6) placé à l'extérieur d'un bâtiment (8) avec un fluide de travail guidé dans un circuit de fluide (1),
- dans lequel le circuit de fluide présente au moins un compresseur (2), au moins un organe de détente (4) et au moins deux échangeurs thermiques (3, 5),
- dans lequel l'un des échangeurs thermiques (5) est raccordé à un circuit de fluide caloporteur (9, 10, 11), qui conduit au bâtiment (8),
- et respectivement une soupape d'arrêt automatique (13, 18) est prévue dans le raccordement du circuit de fluide caloporteur (9, 10, 11) entre le logement (6) et le bâtiment (8) aussi bien dans une conduite d'allée qu'une conduite de retour,
- et une pompe d'alimentation (14) est disposée pour le fluide caloporteur en amont de l'échangeur thermique (5),
**caractérisé en ce que**
la température du circuit de fluide caloporteur (9, 10, 11) est mesurée à l'entrée (15) et à la sortie (18) de l'échangeur thermique (5),
et dans le cas où l'une des deux températures est inférieure à zéro degré Celsius,
les deux soupapes d'arrêt (13, 18) sont raccordées automatiquement et un écoulement du fluide caloporteur est empêché dans le bâtiment (8).

2. Procédé selon la revendication 1, **caractérisé en ce que** le fluide caloporteur est évacué au moyen d'une vanne de vidange (21) à partir de l'échangeur thermique (5) dans un récipient ouvert (22).
